# EUROPEAN PATENT SPECIFICATION

(11) **EP 3 866 452 B1**
(45) Date of publication and mention of the grant of the patent: **06.09.2023**
(21) Application number: 21155051.2
(22) Date of filing: 03.02.2021
(51) Int. Cl.: H04M 11/02

(54) **SYSTEM AND METHOD FOR REMOTE INTERCOMMUNICATION AT POINTS OF ENTRY INTO BUILDINGS OR LIMITED AREAS AND FOR REMOTE MANAGEMENT AND CONTROL OF THE ENTRANCES**
SYSTEM UND VERFAHREN ZUR FERNKOMMUNIKATION AN EINGANGSPUNKTEN IN GEBÄUDEN ODER BEGRENZTEN BEREICHEN UND ZUR FERNVERWALTUNG UND STEUERUNG DER EINGÄNGE
SYSTÈME ET PROCÉDÉ D'INTERCOMMUNICATION À DISTANCE AU NIVEAU DE POINTS D'ENTRÉE DANS DES BÂTIMENTS OU DES ZONES LIMITÉES ET DE GESTION ET DE CONTRÔLE À DISTANCE DES ENTRÉES

(30) Priority: 14.02.2020 IT 202000003034
(43) Date of publication of application: 18.08.2021
(73) Proprietor: Sea S.p.A., 64100 Teramo TE (IT)
(72) Inventor: DI SAVERIO, Fabrizio, 64100 TERAMO TE (IT)
(74) Representative: Milli, Simone

(56) References cited:
- US-A1- 2017 270 732
- US-A1- 2019 149 954

## Description

This invention relates to the control of the accesses to delimited areas, both private and public, for access to which use is currently made of the classic bell, often with the aid of an intercom system possibly equipped with a video camera.

In particular, the invention relates to an electronic system for transmitting an Internet address (URL) and sending it through the Internet to the Internet address obtained on a server for managing a set of data for activating various possible actions resulting from the access request. Currently, access to a delimited place such as a home or a private area, a public building or other places to which access is not free, is obtained by a request by means of an acoustic signal, that is, the classic bell, or in cases with greater attention to security, is managed and controlled by an intercommunication unit (intercom), which allows verbal communication with the person requesting access and, as far as possible, checking their identity, before giving consent to access.

The most widespread intercommunication unit usually comprises one or more intercom devices, which allow communication with a station located close to the entrance, for example, of a building or private home.

In the external unit, installed outside the gate and/or the entrance door of the building, there is a microphone which transmits the voice message of the person who has rung the bell to a reproduction device situated inside the home, or the office, where there is a second microphone which allows a response to be sent and a conversation to be established with the person outside, so as to verify the identity and the intentions.

For this purpose, in many cases there is also a video camera for also capturing the image of the face of the person who has rung the bell, to allow persons who must allow the entrance to see at least the face of the person.

Thanks to this intercommunication between the outside and the inside, the person outside is allowed access by means of an electrical signal which enables the opening of the gate or the entrance door.

These very widespread systems generally comprise various components, of which at least one pushbutton panel, with the pushbuttons each associated with a respective apartment or an internal area, at least one external unit equipped with a microphone and a loudspeaker, installed close to the entrance to the building; an internal unit located in an apartment or in each apartment, a bell and a pushbutton for controlling the opening of the gate/door.

Obviously, an electrical power supply will be necessary and a system for opening the door or the gate, which, upon command, enable the opening of the door or the gate.

As can be well inferred, all these devices require suitable connections, generally wired, the connection of each single pushbutton to a relative acoustic indicator, and the external unit with the internal unit or, each time, with the corresponding internal unit between a plurality of internal units of the various apartments.

In the case of the presence of a video camera, the wiring is further complicated and the necessary devices are also more complex and bulky. There are currently intercom communication systems on the market which can be controlled by a wired or even wireless intercom, which transmits the audio/video signal from the external station via wire or wirelessly towards a fixed, mobile or cordless telephone.

In any case, a power supply system is needed on the inner and outer positions, which, however, have problems in guaranteeing continuous operation, for example, in the case of an electric power failure.

Moreover, since the connection is made towards the unit inside the home, it will be possible to respond to the call only from that point.

In the case of a distance from the location point of the internal unit or absence it will not be possible to respond and allow access to the authorised person.

Solutions have also been proposed with only the external station, in which the communication is established to a mobile phone device using 3G or Wi-Fi data network, but it is always necessary to have an external station.

In all the cases mentioned above, if no response is given to the call and the access request, the owner of the home or the person managing and controlling the accesses would not have the possibility of knowing who has called or has requested access inside.

Moreover, inside the external position there are often the relays for activating the access, for example, for opening the door or the gate and, therefore, the security level is reduced due to the objective possibilities of tampering by malicious individuals.

This situation presents a very high risk for individuals who live alone, in particular the elderly, people with disabilities, but also families or the staff of offices or trading concerns where direct vision of those requesting access to them is not possible or difficult.

The document US20170270732 A1 proposes a method for providing a visitor-controlled access into a building. Initially, entrance identification information is provided to a mobile device of the visitor when the mobile device is in close proximity of an entrance of the building.

The mobile device then sends the entrance identification information to a remote server. In response the server sends hack a list of residents of the building to the mobile device based on the entrance identification information. The mobile device presents the list of residents to the visitor.

The visitor then selects a resident from the list, and subsequently a link is established between the mobile device and a remote device associated with the selected resident. Finally, access grant information is provided to an access control means adapted to control access of the visitor into the building via the entrance.

The document US20190149954 A1 discloses a system and a method for associating digital content with geotags. A method for associating digital content with geotags may commence with receiving, from a user, the digital content. The method may further include receiving, from the user, data associated with the digital content. The data may include at least a geographical location associated with the digital content. The method may continue with creating a geotag associated with the digital content based on the geographical location. The method may further include determining whether one or more further geotags associated with the user already exist. Based on the determining that the one or more further geotags associated with the user already exist, the geotag may be associated with the one or more further geotags. The method may include presenting a virtual map to the user. The virtual map may include at least the geotag and the one or more geotags.

The aim of the invention is therefore to provide a system for management of the communication and control of the accesses which allows a communication to be set up without an intercom, with total management of the response to a caller and authorisation to enter the property, all performed in a digital manner (by means of an application via the Internet). Another aim of the invention is to provide a system which, exploiting the potential of Internet protocols, in particular those currently used in the home automation sector, such as the TCP/IP protocol, allows the exchange of information between a device held by an external user who requires access, for example, to a housing unit, and a device available to individuals who use the housing unit or own the housing unit and must manage the access.

Yet another aim of the invention is to provide a system in which it is possible to display details and coordinates of the owner and/or of the person who occupies the housing unit, in an extremely simple and practical manner.

The aims specified are substantially achieved by a system and a method for intercommunication with a building or a delimited area with controlled access, as defined in the appended claims.

Further features and advantages of the present invention are more apparent in the non-limiting description of a preferred embodiment of the above-mentioned system, as illustrated in the accompanying drawings, in which:
- Figure 1 is a general view of the system according to the invention, in a simplified block diagram;
- Figure 2 shows a detail of the system illustrated in Figure 1.

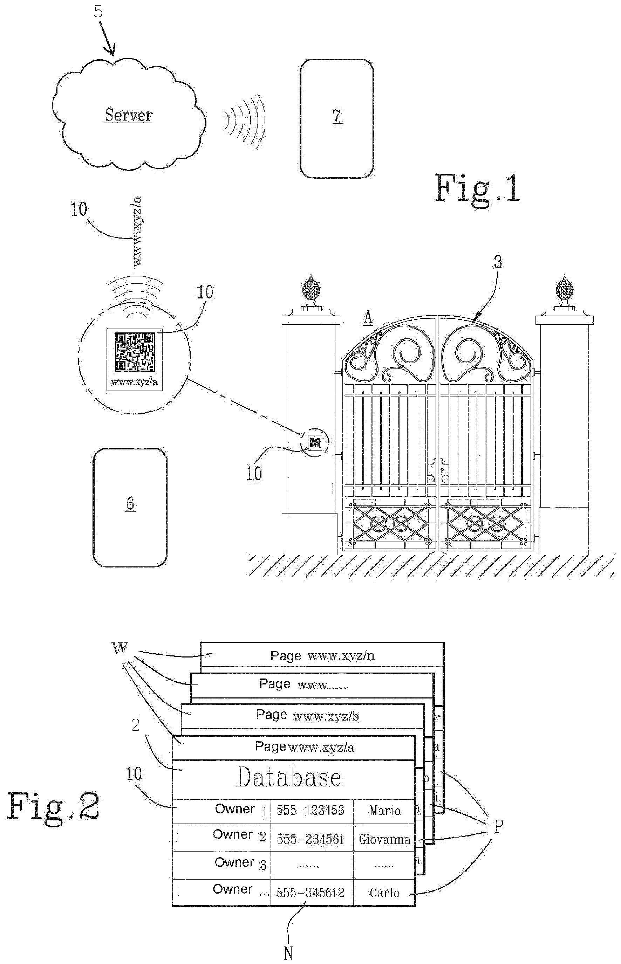

With reference to Figures 1 and 2, which show the intercommunication system according to the invention, which is described, for the sake of brevity and simplicity, only in terms of the essential parts, meaning that other components, materials or software, necessary for the correct and complete operation of the system will be considered present even though they are not described.

The numeral 10 denotes a URL address in a coded graphical (QR-code) or alphanumeric form, located near the means 3 for locking the controlled access to a building or a delimited area A, in such a way as to be visible and accessible from the outside.

Without constituting a limitation, in the example embodiment illustrated the locking means 3 consist of a gate, which provides access to an open area A, which may be a courtyard.

It should be noted that the locking means 3 might, on the other hand, consist of an entrance door leading into a building, an office, a factory, a private club, a commercial area, a sports field, etc.

For simplicity, reference will be made below to a gate 3 which gives access to a garden A, without thereby limiting the sphere of application of the invention.

The graphical form of the URL address is represented by a two-dimensional code known as a OR-code, which is currently widely used, which contains all the information necessary to define it, but in a digital coded form. The alphanumeric representation, on the other hand, indicates the URL address in plain text, and can be simply acquired optically, or even reproduced manually on a keyboard.

The URL address, both in the encoded graphical form and in the plain text alphanumeric form, is reproduced on a label located, for example, on the post which supports one of the wings of the gate 3.

Figure 1 shows both embodiments of the URL address, in order to provide example of both, but it should be understood that only one, the OR-code code or the alphanumeric representation, will be reproduced in reality on the label displayed.

Obviously, other positions are also possible, provided the code remains visible and accessible.

Protective means may be provided, if necessary, for example a removable or transparent cover, to prevent intentional or accidental damage to the support bearing the URL address and, besides a label, it is possible to use a card or a plate or other similar support.

The URL address 10 is detected by the person requesting access by means of a first multimedia electronic device 6 (in particular a first mobile electronic telephone device), generally consisting of a smartphone, but which may also be a tablet or other similar multimedia device, equipped with a camera which allows the acquisition of the code.

It should be noted that the person, without any need for specific applications, may through the first multimedia electronic device 6 be directed to the URL address 10.

In this case, it is possible to be directed in a particularly simple manner to the URL address 10: it is in fact sufficient to scan the URL 10 from (or manually enter in) the first multimedia electronic device 6 to be directed to the URL address 10.

In the case of the OR-code the software contained in the multimedia electronic device is able to decode the two-dimensional sequence of points and obtain the URL address.

In the simplest form which comprises the plain text display of the URL address 10, the multimedia electronic device must be equipped with optical character recognition software (OCR) which reconstructs the URL address in a digitalised form. It would also be possible to enter the smartphone, or other device, using the digital keypad reproduced on the touch screen.

A series of operating instructions (configured to be installed in the first mobile multimedia electronic device), part of which constitute a suitable "App" recorded in the first multimedia electronic device 6, or smartphone, controls the acquisition of the URL address 10 and after a suitable command connects the multimedia electronic device, by means of the Internet, or alternatively another geographical network, provided it is suitable for transmitting data, with a server 5, in which a series of web pages are made available, each corresponding to a URL address and designed to be selected upon receiving the corresponding URL detected by the multimedia electronic device 6.

In more detail, once the contact has been established between the first multimedia electronic device 6 and the server 5, the map of the zone is displayed on the screen of the smartphone, delimited on the basis of the geolocation system (GPS) or on the same URL address 10, with a graphical symbol set up at the entrance (on the map).

In order to activate the sequence of subsequent operations, it is therefore necessary that the person possessing the first multimedia electronic device 6 selects the graphical symbol, touching it on the touch screen. The map of the zone may be defined by means of a suitable software, for example proprietary software, or by using existing mapping services, such as, for example, Google Maps.

For this reason, the map may be generated by an application present in the first multimedia electronic device 6 or by a remote server (and from these made available for displaying on the first multimedia electronic device 6).

It should be noted that this activation system makes it possible to operate even if the owner of the first multimedia electronic device 6 is not located close to the entrance of the building or the area to which access is requested.

In fact, it is possible to display the map with the information associated with the users who own the buildings even without the user being physically at the physical building.

In fact, the app resident on the multimedia electronic device may be able to obtain and show the graphical symbol corresponding to a predetermined building or a predetermined area when the user indicates the position on the map displayed on the touch screen of the multimedia electronic device 6, despite being in a different area.

When the web page corresponding to the URL address 10 is reached on the server 5, a web application program which is running locally, consisting of another part of the set of operating instructions, interrogates a database 2, resident on the server 5 and associated with the selected web page, to retrieve a series of telephone numbers N of one or more addressees P to which the building or the delimited area A refers, together with other addressees P of other buildings or areas, which have joined the service, for example by means of a suitable subscription.

This series of telephone numbers N of one or more addressees is then transmitted to the multimedia electronic device 6 and displayed on the screen of the latter, if necessary together with a list of corresponding names, in such a way as to allow the person requesting access to select one (indicating it, for example, on the touch screen).

It is also possible to display further information relative to the owner, or the list of owners, again in compliance with the privacy requirements, and therefore according to the limitations defined by the consent issued, as recorded in the database 2.

Once one of the numbers on the list present in the database 2 has been selected, the operating application on the server sets up a telephone call between the telephone number of the multimedia electronic device 6 connected with the server 5 and the telephone number N retrieved from the database 2.

In this way, a virtual intercom service is created.

For this reason, the system puts in communication the first smartphone 6 with a second multimedia electronic device 7 (in particular a second mobile electronic telephone device), generally comprising a smartphone, but being able to also identify itself in a tablet or other similar multimedia device, designed to allow the communication, in possession of a addressee to which the building or the delimited area A refer, and identified by the name P retrieved from the database 2.

In practice, it may be the owner of an apartment of the building, or a tenant of the building, or the doormen of a property, of a dealer located behind a sales counter who has no view of the entrance, or the employee of a factory, etc.

It should be noted that the communication established in this way can be carried out via the Internet, using a VoIP protocol, or by means of a GSM/GPRS telecommunication network.

At this point, the conversation, which until now has been carried out through the intercom apparatuses, takes place, on the other hand, by means of a normal telephone connection, with the elimination of the internal and external intercom stations, the relative wiring and relative power supplies.

Once the person requesting access has been recognised and it has been decided to allow access, the person requesting access telephonically can, if necessary, operate the normal pushbuttons for opening the gate 3, allowing access to the caller, if present.

Alternatively, a command can be activated, for example by pressing a pushbutton on the touch screen of the smartphone 7, and a release code transmitted, which allows opening of the gate 3 for entrance to the building or the delimited area A.

There may be various methods for sending and entering the release code. It may be a code transmitted directly, after entering a password or other identification means, to a home automation control unit, using Wi-Fi or the Internet, which controls the opening of the gate 3, or it may be sent to the first smartphone 6, if necessary through the server 5 which records the sending, and transferred to the opening system of the gate by Bluetooth-tooth, or NFC.

In a simpler form, the release code may appear on the screen of the first smartphone 6 and the person can key it into an accessible keypad connected to the system for opening the gate 3.

In order to avoid an improper use of the release code, this may be regenerated each time and/or after a certain time, by means of a suitable algorithm also present inside the opening system of the gate 3, or transmitted to it in a suitable manner.

It should be noted that, if necessary, this system makes it possible to display the name, if registered in the address book of the second smartphone 7, or the telephone number of the person calling, before the recipient of the call responds, as is the case for normal telephone calls.

In this way it is possible to select whether or not to respond, and increase the security level. Malicious or unknown individuals can therefore be excluded from the moment of initial contact.

This communication system, since both the user and caller are connected to a web application program, could also advantageously allow, if it is necessary, the exchange of documents in an electronic format, digital signatures or the making of payments, without necessarily allowing access, or allowing access only to some delimited areas, for example the garden, the hallway where the mail boxes are located, etc.

Summing up, the method actuated by the system described to establish an intercommunication between a person wishing to access a building or a delimited area A, with controlled access, and an addressee P to which the building or the delimited area A refer, comprises preparing a URL address 10 in coded graphical form (QR-code) or alphanumeric form, made accessible from the outside near an entrance I, the preparation of a remote server 5, connected to the Internet and preparing a database 2 contained in the server 5 and provided with a series of web pages W with associated telephone numbers N (or other information) of one or more addressees P to which said building or delimited area A refers.

Each user P registered in the database 2 is assigned a URL address, which will then be applied close to the entrance I, in an accessible position, to be scanned by a caller who wishes to make contact with the user, by means of a first multimedia electronic device 6.

On the first multimedia electronic device, for example a smartphone, possessed by a person requesting access to the building or the area A, the app consisting of a part of the set of operating instructions prepared performs the detection of the URL address 10 and connects, by the Internet or another suitable geographical network, to the server 5.

Access to the server 5 may be allowed by means of a dialler of digital codes replicated on the site or by authentication with passwords or by reading fingerprints from the mobile phone or other caller identification tool.

Having established the contact between the first multimedia electronic device 6 and the server 5, the map of the zone, delimited on the basis of the geolocation system (GPS) or at the same URL address 10, is displayed on the screen of the smartphone with a graphical symbol prepared at the entrance, and the sequence of subsequent operations is activated by touching the touch screen.

The map of the zone, defined by a suitable software or by using Google Maps, makes it possible to operate even if the owner of the first multimedia electronic device 6 is not located close to the entrance of the building or the area of interest, indicating the desired position on the touch screen, where the graphical symbol corresponding to a predetermined building or a predetermined area will appear.

Once the graphical symbol has been activated, on the server 5, the application program comprising the remaining part of the operating instructions prepared identifies a web page, amongst the many contained, identified by the URL address 10 detected by the multimedia electronic device 6, which returns a series of telephone numbers N (or other information) of one or more addressees P to which the building or the delimited area A refers, contained in a database 2 together with other addressees P of other buildings or areas, which contributed to the service, for example by means of a suitable subscription.

This series of telephone numbers N of one or more addressees is then transmitted to the multimedia electronic device 6 and displayed on the screen of the latter, if necessary together with a list of corresponding names, in such a way as to allow the person requesting access to select one, indicating it on the touch screen.

At this point, the server 5 sets up a telephone call between the first multimedia electronic device 6 and a second multimedia electronic device 7, a smartphone, corresponding to the telephone number retrieved from the database 2.

The recipient P of the call replies and recognises the caller.

It is possible to provide or request the sending of further information, such as an image of the caller obtained by means of the camera of the first smartphone 6, or the name or telephone number of the caller, and it is possible to display further information relative to the owner, or the list of owners, again in accordance with the privacy requirements, and therefore according to the limitations permitted by the consent issued, as recorded in the database 2.

Alternatively, the OR-code or the alphanumeric form of the URL address are displayed on a display, located at the entrance I, from which the reading can be performed using the smartphone 6.

With the use of this invention, the owner of the apartment or area A towards which access is requested achieves the advantage of knowing who actually called or is calling, since the name or the number of caller is displayed on his/her smartphone, as in a normal telephone call.

The server 5 records both the data of the visitor calling and the owner user, also allowing a log of the calls and accesses allowed or denied to be interrogated with an access control function.

The same function may be achieved by means of a sensor identifying the visitor which can be read by the caller's mobile phone to make an automatic call to the user towards whom access is requested.

On the other hand, with regard to the owner of the system or the tenant of the apartment, or the dealer, etc, or his/her family, access may be allowed by typing in a code on a virtual keypad generated by scanning the QR-code, or by means of another protected authentication system, again operational on the smartphone, such as, for example, digital fingerprints which is already a function present on all the latest generation of mobile phones.

It should be noted that, since the external and internal unit are both replaced, respectively, by the OR-code or URL address, on which smartphones interact by both the caller and the receiver, the problem of the electricity supply is also resolved, since it is no longer necessary to wire the external and internal units with considerable savings in costs and also resolving the problem of possible power cuts.

Moreover, in the case of multi-users, the manager of the system and, therefore, of the APP or site would also have the possibility to handle multiple communications to all the owners of the property and also to be able to send condominium documents or various information, thus saving the time necessary for physical meetings.

Moreover, it would also be possible to forward the call, or at least a warning, to a second user indicated in the database. This function would prove particularly useful in the case of the elderly or people with disabilities, in which case the call would also be sent, or at least notified, to a relative who could check the identity of the caller and have news of the access request, with the obvious advantages in terms of greater security. The use of a mapping service also makes it possible to establish the communication between the visitor and the owner even when the former is not close to the home or in general of the building of the latter. There may therefore be the presence of the recipient of the visit even during the route in order to reach the location or even being located only close to the home, safeguarding the person who is questioned.

According to the embodiments described, use of the Internet or another geographical network suitable for data transmission is indicated.

The invention described makes it possible to achieve a total dematerialisation of the intercom and the access control since the apparatuses necessary for this purpose are entirely replaced by a web application which reads an encrypted OR-code associated with the user and the communication signal is controlled on the Internet directly between caller and user mobile phones.

The proposed system is easy to install and is extremely safe and reliable for security purposes.

Both the external and the internal station could be eliminated and the user might also know not only that he/she has received a call but also from what caller code in the case of communication via common communications apps (for example "WhatsApp", "Viber", "Skype", "WeChat", etc.), with the advantage of a greater security.

With the proposed system, both managing the remote opening of an entrance and the communication between caller and called with authorisation to enter the property occurs without an intercom, all performed in a digital manner and with an Internet application.

The communication occurs entirely between mobile devices belonging to the caller and the owner user, thanks to the use of the OR-code or URL address located close to the access.

It should be noted that the system is an "open" type system, that is to say, it is able to operate in the presence of any mobile device, even without it having a specific application installed.

It is sufficient for a user to scan the OR-code using the mobile device to be linked to the encoded URL and be able to display the information available there and perform any operations (call, etc.).

As is easy to imagine, the embodiments described may be made more complete and functional, associating a much higher number of possible operations to the same system.

All the other components, both in a physical state and in the form of software, necessary for the correct and complete operation of the system, which are not described here for reasons of simplicity and brevity, but whose presence or need will become evident to technicians in the trade, will need to be added to the various components described above.

## Claims

1. An intercommunication system for a building or a delimited area (A) with controlled access, **characterised in that** it comprises:
- a first multimedia electronic device (6);
- a support bearing a URL address (10) made accessible from the outside close to an entrance (I) to said building or delimited area (A), the URL address (10) being detectable by means of the multimedia electronic device (6);
- a series of operating instructions for displaying on said first multimedia electronic device (6) a virtual map wherein a graphical element identifies, in said virtual map, a zone corresponding to said entrance (I) and the association to it of said URL address (10);
a remote server (5), connected to the Internet or to another geographical network suitable for data transmission and designed to receive a call with said URL address (10) from the multimedia electronic device (6) and to provide at least one web page (W), corresponding to said URL address (10), with associated telephone numbers (N) of one or more addressees (P);
- a database (2) resident on said server (5) and containing a series of said telephone numbers (N) for displaying on said multimedia electronic device (6) a list of said one or more addressees (P) to which said building or delimited area (A) refers in such a way as to allow one or more addressees (P) to which said building or delimited area (A) refer and set up a telephone call.

2. The system according to claim 1, wherein the URL address (10) is displayed on a label in a coded graphical form, such as OR-codes, or in plain text in alphanumeric form, and is detectable by optical acquisition devices associated with said first multimedia electronic device (6).

3. The system according to claim 1, wherein said URL address (10) is adapted to be detected remotely by means of said multimedia electronic device (6) by telematic means, selecting a graphical element identified on the virtual map and corresponding to said desired entrance (I) and retrieving it from a corresponding list provided on said server (5).

4. The system according to any one of claims 1 to 3, wherein the telephone call between the telephone number of the first multimedia electronic device (6) connected to said server (5) and the telephone number retrieved from said database (2) and corresponding to one of the addressees (P) to which the building or delimited area (A) refer is performed by means of the Internet, by means of a VoIP protocol, or by means of a GSM/GPRS telecommunication network.

5. The system according to any one of claims 1 to 4, wherein said series of instructions is in the form of an app which is able to display a list of names (P) and is configured for selecting the telephone number to which said server (5) sends the call.

6. The system according to any one of claims 1 to 5, wherein said series of instructions is also configured to allow a release code to be sent which allows the opening of means (3) for locking access to the building or delimited area (A).

7. The system according to any one of claims 1 to 6, wherein the acquisition of said URL (10) comprises the use of said first multimedia electronic device (6) consisting of a smartphone, a tablet or other similar multimedia device, equipped with a camera for acquiring said URL address (10) reproduced in a coded or alphanumeric graphical form, and the telephone call is sent to a second multimedia electronic device (7), also consisting of a smartphone, a tablet or other similar multimedia device, to which the telephone number retrieved from the database (2) corresponds.

8. The system according to claim 7, wherein said URL address (10) is coded in the form of a OR-code on a label made accessible outside said entrance (I).

9. A method for establishing an intercommunication between a person wishing to access a building or a delimited area (A) with controlled access, and at least one addressee to which said building or delimited area (A) refers, **characterised in that** it comprises:
- providing at least one URL address (10) in a coded graphical or alphanumeric form, made accessible from the outside close to an entrance (I) to said building or delimited area (A);
- the graphical or alphanumeric code (10) is detected and entered on the Internet or other geographical network suitable for data transmission ;
- providing a remote server (5), connected to the Internet or to another geographical network suitable for data transmission and which can be directed through said URL address (10);
- preparing a first multimedia electronic device (6) and a second multimedia electronic device (7);
- providing a database (2) contained in said remote server (5) containing a series of web pages (W) corresponding to different URL addresses (10) and containing corresponding telephone numbers (N) of one or more addressees (P) of buildings or delimited areas (A);
- the displaying on the first multimedia electronic device (6) of a virtual map wherein a graphical element identifies, in said virtual map, an area corresponding to said entrance (I) and the association to it of said URL address (10);set up a telephone call, by means of the server (5), between the first multimedia electronic device (6) and the second multimedia electronic device (7) corresponding to a telephone number retrieved from the database (2) and selected on the first multimedia electronic device (6).

10. The method according to claim 9, wherein said URL (10) is detected by means of said first multimedia electronic device (6) with an image acquisition capacity and said telephone call is established with a second multimedia electronic device (7).

11. The method according to any one of claims 9 to 10, wherein the intercommunication between said first multimedia electronic device (6) and the telephone number retrieved from said database (2) is established on the Internet, by means of a VoIP protocol, or by means of a GSM/GPRS telecommunication network, in both cases with elimination of internal and external intercom stations.

12. The method according to claim 9, comprising a step of acquiring said URL address (10) by means of a device for acquiring said first multimedia electronic device (6) and a subsequent step, actuated by said first multimedia electronic device (6), of displaying the contents present to said URL address (10).

## Patentansprüche

1. Wechselsprechsystem für ein Gebäude oder einen begrenzten Bereich (A) mit Zugangskontrolle, **dadurch gekennzeichnet, dass** es Folgendes umfasst:
- ein erstes elektronisches Multimedia-Gerät (6);
- einen eine URL-Adresse (10) tragender Träger, der von der Außenseite in der Nähe eines Eingangs (I) zum Gebäude oder begrenzten Bereich (A) zugänglich gemacht wird, wobei die URL-Adresse (10) mittels des elektronischen Multimedia-Geräts (6) erkennbar ist;
- eine Reihe von Bedienungsanweisungen, um auf dem ersten elektronischen Multimedia-Gerät (6) einen virtuellen Plan anzeigen zu lassen, wobei ein grafisches Element auf dem virtuellen Plan eine Zone identifiziert, die dem Eingang (I) entspricht, und deren Assoziation mit der URL-Adresse (10);
einen Remote-Server (5), der mit dem Internet oder einem anderen geografischen Netzwerk verbunden ist, das für die Datenübertragung geeignet und ausgestaltet ist, um einen Anruf mit der URL-Adresse (10) vom elektronischen Multimedia-Gerät (6) zu empfangen und mindestens eine Webseite (W) bereitzustellen, die der URL-Adresse (10) entspricht, mit assoziierten Telefonnummern (N) von einem oder mehreren Adressaten (P);
- eine Datenbank (2), die auf dem Server (5) resident ist und eine Reihe der Telefonnummern (N) enthält, um auf dem elektronischen Multimedia-Gerät (6) eine Liste des einen oder der mehreren Adressaten (P) anzuzeigen, auf die sich das Gebäude oder der begrenzte Bereich (A) bezieht, sodass einem oder mehreren Adressaten (P), auf die sich das Gebäude oder der begrenzte Bereich (A) bezieht, erlaubt wird, eine Telefonverbindung herzustellen.

2. System nach Anspruch 1, wobei die URL-Adresse (10) auf einem Schild in einer verschlüsselten grafischen Form wie QR-Codes oder als Klartext in alphanumerischer Form angezeigt wird und durch optische Erfassungsvorrichtungen erkennbar ist, die mit dem ersten elektronischen Multimedia-Gerät (6) assoziiert sind.

3. System nach Anspruch 1, wobei die URL-Adresse (10) ausgelegt ist, um im Fernmodus mittels des elektronischen Multimedia-Geräts (6) durch telematische Mittel erkannt zu werden, indem ein auf dem virtuellen Plan identifiziertes grafisches Element, das dem gewünschten Eingang (I) entspricht, ausgewählt und von einer entsprechenden, auf dem Server (5) bereitgestellten Liste abgerufen wird.

4. System nach einem der Ansprüche 1 bis 3, wobei die Telefonverbindung zwischen der Telefonnummer des ersten elektronischen Multimedia-Geräts (6), die mit dem Server (5) verbunden ist, und der aus der Datenbank (2) abgerufenen und einem der Adressaten (P), auf den sich das Gebäude oder der begrenzte Bereich (A) bezieht, entsprechenden Telefonnummer über das Internet mittels eines VoIP-Protokolls oder mittels eines GSM-/GPRS-Telekommunikationsnetzwerks durchgeführt wird.

5. System nach einem der Ansprüche 1 bis 4, wobei die Reihe von Anweisungen die Form einer App aufweisen, die in der Lage ist, eine Liste von Namen (P) anzuzeigen, und konfiguriert ist, um die Telefonnummer zu wählen, an die der Server (5) den Anruf sendet.

6. System nach einem der Ansprüche 1 bis 5, wobei die Reihe von Anweisungen auch konfiguriert ist, um zu erlauben, dass ein Freigabecode gesendet wird, der den Öffnungsmitteln (3) erlaubt, den Zugang zum Gebäude oder dem begrenzten Bereich (A) abzusperren.

7. System nach einem der Ansprüche 1 bis 6, wobei die Erfassung der URL (10) die Nutzung des ersten elektronischen Multimedia-Geräts (6) umfasst, das aus einem Smartphone, einem Tablet oder einem sonstigen Multimedia-Gerät besteht, das mit einer Kamera zum Erfassen der URL-Adresse (10) ausgestattet ist, die in einer verschlüsselten oder alphanumerischen grafischen Form wiedergegeben ist, und der Telefonanruf an ein zweites elektronisches Multimedia-Gerät (7) gesendet wird, das ebenfalls aus einem Smartphone, einem Tablet oder einem sonstigen ähnlichen Multimedia-Gerät besteht, mit dem die aus der Datenbank (2) abgerufene Telefonnummer übereinstimmt.

8. System nach Anspruch 7, wobei die URL-Adresse (10) in der Form eines QR-Codes auf einem Schild, das außerhalb des Eingangs (I) zugänglich gemacht wird, verschlüsselt ist.

9. Verfahren zur Herstellung eines Wechselverkehrs zwischen einer Person, die Zugang zu einem Gebäude oder einem begrenzten Bereich (A) mit Zugangskontrolle erhalten möchte, und mindestens einem Adressaten, auf den sich das Gebäude oder der begrenzte Bereich (A) bezieht, **dadurch gekennzeichnet, dass** es Folgendes umfasst:
- Bereitstellen von mindestens einer URL-Adresse (10) in einer verschlüsselten grafischen oder alphanumerischen Form, die von der Außenseite in der Nähe eines Eingangs (I) zum Gebäude oder begrenzten Bereich (A) zugänglich gemacht ist,
- wobei der grafische oder alphanumerische Code (1) im Internet oder einem anderen geografischen Netzwerk, das sich für die Datenübertragung eignet, erkannt und eingegeben wird;
- Bereitstellen eines Remote-Servers (5), der mit dem Internet oder einem anderen geografischen Netzwerk, das für die Datenübertragung geeignet ist, verbunden ist und der durch die URL-Adresse (10) adressiert werden kann;
- Vorbereiten eines ersten elektronischen Multimedia-Geräts (6) und eines zweiten elektronischen Multimedia-Geräts (7);
- Bereitstellen einer Datenbank (2), die im Remote-Server (5) enthalten ist und eine Reihe von Webseiten (W) enthält, die unterschiedlichen URL-Adressen (10) entsprechen und entsprechende Telefonnummern (N) von einem oder mehreren Adressaten (P) von Gebäuden oder begrenzten Bereichen (A) enthalten;
- Anzeigen eines virtuellen Plans auf dem ersten elektronischen Multimedia-Gerät (6), wobei ein grafisches Element auf dem virtuellen Plan einen Bereich identifiziert, der dem Eingang (I) entspricht, und dessen Assoziieren mit der URL-Adresse sowie Herstellen einer Telefonverbindung mittels des Servers (5) zwischen dem ersten elektronischen Multimedia-Gerät (6) und dem zweiten elektronischen Multimedia-Gerät (7) entsprechend einer aus der Datenbank (2) abgerufenen und auf dem ersten elektronischen Multimedia-Gerät (6) ausgewählten Telefonnummer.

10. Verfahren nach Anspruch 9, wobei die URL (10) mittels des ersten elektronischen Multimedia-Geräts (6) mit einer Bilderfassungsfähigkeit erkannt wird und die Telefonverbindung mit einem zweiten elektronischen Multimedia-Gerät (7) hergestellt wird.

11. Verfahren nach einem der Ansprüche 9 bis 10, wobei der Wechselverkehr zwischen dem ersten elektronischen Multimedia-Gerät (6) und der aus der Datenbank (2) abgerufenen Telefonnummer im Internet mittels eines VoIP-Protokoll oder mittels eines GSM-/GPRS-Telekommunikationsnetzwerks hergestellt wird, in beiden Fällen ohne interne und externe Gegensprechanlagen.

12. Verfahren nach Anspruch 9, umfassend einen Schritt zum Erfassen der URL-Adresse (10) mittels eines Geräts zum Erfassen des ersten elektronischen Multimedia-Geräts (6) und einen darauffolgenden Schritt, der vom ersten elektronischen Multimedia-Gerät (6) ausgelöst wird, zum Anzeigen der an der URL-Adresse (10) vorhandenen Inhalte.

## Revendications

1. Système d'intercommunication dans un bâtiment ou une zone délimitée (A) à accès contrôlé, **caractérisé en ce qu'**il comprend :
- un premier dispositif électronique multimédia (6) ;
- un support portant une adresse URL (10) rendue accessible de l'extérieur à proximité d'une entrée (I) dudit bâtiment ou zone délimitée (A), l'adresse URL (10) étant détectable au moyen du dispositif électronique multimédia (6) ;
- une série d'instructions de fonctionnement pour afficher sur ledit premier dispositif électronique multimédia (6) une carte virtuelle dans laquelle un élément graphique identifie, dans ladite carte virtuelle, une zone correspondant à ladite entrée (I) et l'association à celle-ci de ladite adresse URL (10) ;
un serveur distant (5), connecté à Internet ou à un autre réseau géographique adapté à la transmission de données et conçu pour recevoir un appel avec ladite adresse URL (10) depuis le dispositif électronique multimédia (6) et pour fournir au moins une page Web (W), correspondant à ladite adresse URL (10), avec des numéros de téléphone associés (N) d'un ou plusieurs destinataires (P) ;
- une base de données (2) résidant sur ledit serveur (5) et contenant une série desdits numéros de téléphone (N) pour afficher sur ledit dispositif électronique multimédia (6) une liste desdits un ou plusieurs destinataires (P) auxquels se réfère ledit bâtiment ou ladite zone délimitée (A) de manière à permettre à un ou plusieurs destinataires (P) auxquels se réfère ledit bâtiment ou ladite zone délimitée (A) d'établir un appel téléphonique.

2. Système selon la revendication 1, dans lequel l'adresse URL (10) est affichée sur une étiquette sous une forme graphique codée, telle que des codes QR, ou en texte brut sous une forme alphanumérique, et est détectable par des dispositifs d'acquisition optique associés audit premier dispositif électronique multimédia (6).

3. Système selon la revendication 1, dans lequel ladite adresse URL (10) est adaptée pour être détectée à distance au moyen dudit dispositif électronique multimédia (6) par des moyens télématiques, en sélectionnant un élément graphique identifié sur la carte virtuelle et correspondant à ladite entrée souhaitée (I) et en le récupérant à partir d'une liste correspondante fournie sur ledit serveur (5).

4. Système selon l'une quelconque des revendications 1 à 3, dans lequel l'appel téléphonique entre le numéro de téléphone du premier dispositif électronique multimédia (6) connecté audit serveur (5) et le numéro de téléphone extrait de ladite base de données (2) et correspondant à l'un des destinataires (P) auxquels se réfère le bâtiment ou la zone délimitée (A) est effectué au moyen d'Internet, au moyen d'un protocole VoIP, ou au moyen d'un réseau de télécommunication GSM/GPRS.

5. Système selon l'une quelconque des revendications 1 à 4, dans lequel ladite série d'instructions est sous la forme d'une application qui est capable d'afficher une liste de noms (P) et est configurée pour sélectionner le numéro de téléphone auquel ledit serveur (5) envoie l'appel.

6. Système selon l'une quelconque des revendications 1 à 5, dans lequel ladite série d'instructions est également configurée pour permettre l'envoi d'un code de libération qui permet l'ouverture de moyens (3) pour verrouiller l'accès au bâtiment ou à la zone délimitée (A) .

7. Système selon l'une quelconque des revendications 1 à 6, dans lequel l'acquisition de ladite URL (10) comprend l'utilisation dudit premier dispositif électronique multimédia (6) constitué d'un smartphone, d'une tablette ou d'un autre dispositif multimédia similaire, équipé d'une caméra pour acquérir ladite adresse URL (10) reproduite sous une forme graphique codée ou alphanumérique, et l'appel téléphonique est envoyé à un second dispositif électronique multimédia (7), également constitué d'un smartphone, d'une tablette ou d'un autre dispositif multimédia similaire, auquel correspond le numéro de téléphone extrait de la base de données (2).

8. Système selon la revendication 7, dans lequel ladite adresse URL (10) est codée sous la forme d'un code QR sur une étiquette rendue accessible à l'extérieur de ladite entrée (I).

9. Procédé pour établir une intercommunication entre une personne souhaitant accéder à un bâtiment ou à une zone délimitée (A) à accès contrôlé, et au moins un destinataire auquel se réfère ledit bâtiment ou ladite zone délimitée (A), **caractérisé en ce qu'**il comprend :
- fournir au moins une adresse URL (10) sous forme graphique ou alphanumérique codée, rendue accessible de l'extérieur à proximité d'une entrée (I) dudit bâtiment ou de ladite zone délimitée (A) ;
- le code graphique ou alphanumérique (10) est détecté et saisi sur Internet ou un autre réseau géographique adapté à la transmission de données ;
- fournir un serveur distant (5), connecté à Internet ou à un autre réseau géographique adapté à la transmission de données et qui peut être dirigé via ladite adresse URL (10) ;
- préparer un premier dispositif électronique multimédia (6) et un second dispositif électronique multimédia (7) ;
- fournir une base de données (2) contenue dans ledit serveur distant (5) contenant une série de pages Web (W) correspondant à différentes adresses URL (10) et contenant les numéros de téléphone correspondants (N) d'un ou plusieurs destinataires (P) de bâtiments ou de zones délimitées (A) ;
- afficher sur le premier dispositif électronique multimédia (6) une carte virtuelle dans laquelle un élément graphique identifie, dans ladite carte virtuelle, une zone correspondant à ladite entrée (I) et l'association à celle-ci de ladite adresse URL (10) ; et établir un appel téléphonique, au moyen du serveur (5), entre le premier dispositif électronique multimédia (6) et le second dispositif électronique multimédia (7) correspondant à un numéro de téléphone extrait de la base de données (2) et sélectionné sur le premier dispositif électronique multimédia (6).

10. Procédé selon la revendication 9, dans lequel ladite URL (10) est détectée au moyen dudit premier dispositif électronique multimédia (6) avec une capacité d'acquisition d'image et ledit appel téléphonique est établi avec un second dispositif électronique multimédia (7) .

11. Procédé selon l'une quelconque des revendications 9 à 10, dans lequel l'intercommunication entre ledit premier dispositif électronique multimédia (6) et le numéro de téléphone extrait de ladite base de données (2) est établie sur Internet, au moyen d'un protocole VoIP, ou au moyen d'un réseau de télécommunication GSM/GPRS, dans les deux cas avec élimination des stations d'interphonie internes et externes.

12. Procédé selon la revendication 9, comprenant une étape d'acquisition de ladite adresse URL (10) au moyen d'un dispositif pour acquérir ledit premier dispositif électronique multimédia (6) et une étape ultérieure, actionnée par ledit premier dispositif électronique multimédia (6), d'afficher le contenu présent à ladite adresse URL (10).
